# EUROPÄISCHE PATENTANMELDUNG

(11) **EP 1 138 735 A2**
(43) Veröffentlichungstag der Anmeldung: **04.10.2001**
(21) Anmeldenummer: 01105843.5
(22) Anmeldetag: 09.03.2001
(51) Int. Cl.: C09J 7/02

(54) **Schutzfolie für Dekorfolien**

(30) Priorität: 29.03.2000 DE 10015708
(71) Anmelder: Beiersdorf Aktiengesellschaft, 20245 Hamburg (DE)
(72) Erfinder: Seitz, Karsten, Dr., 21614 Buxtehude (DE); Böhm, Nicolai, Dr., 20257 Hamburg (DE); Klemp, Jobst-Waldemar, 22869 Schenefeld (DE); Schütz, Ingolf, 20535 Hamburg (DE)

(57) **Zusammenfassung**

Verwendung von mit Selbstklebemassen ausgerüsteten Folien auf Basis von Polyolefinen zum temporären Schutz von Dekorfolien.

## Beschreibung

Die Erfindung betrifft die Verwendung von selbstklebenden, auf Polyolefinen basierenden Folien zum Schützen der Oberflächen von Dekorfolien, insbesondere von bandbeschichteten Metallbändem.

Die Bandbeschichtung (engl. Coil Coating) von Metallbändem mit organischen Materialien ist ein weitverbreitetes, sehr effizientes Verfahren zum kontinuierlichen Beschichten von Metallen, um die Oberflächen von Metallen zu veredeln. Metallbänder in Form von Rollen (Coils) werden dabei in einem Arbeitsgang gereinigt, chemisch vorbehandelt, mit einem organischen Material beschichtet, das gegebenenfalls eingebrannt wird, und nach Kühlung wieder zu Rollenware aufgewickelt. Das Verfahren ist so ausgereift, daß ein kontinuierliches Arbeiten möglich ist. Als organische Beschichtungsmaterialien werden sowohl Lacke als auch Folien eingesetzt.

Als Lacke werden meist Einbrennlacke auf Basis von Alkyd-Harzen, Polyester-Harzen, Acrylaten, Urethan-Acrylaten, Silikon-Acrylaten, Vinyl-Copolymerisaten oder Epoxid-Harzen eingesetzt. In neuester Zeit gibt es auch Entwicklungstätigkeiten, die Lacke statt auf thermischem Wege über UV-Strahlung zu vemetzen.

Die Alternative zu Lackbeschichtung sind Kunststofffolien. Diese werden entweder durch hitzeaktivierbare Klebstoffe oder durch Hitzeaktivierung der Folie selbst an das Metall gebunden. Als Folienmaterialien kommen PVC, Acrylate, Polyester oder auch Polyolefine zum Einsatz. Die Folien können einschichtig oder Verbundfolien aus mehreren Schichten sein, in denen mehrere Grundmaterialien, die unterschiedlich zum Gesamteigenschaftsprofil beitragen, zum Einsatz kommen; gegebenenfalls ist die eine der Außenschichten ein hitzeaktivierbarer (heißsiegelfähiger) Klebstoff, mit dem die Folie an das Metall angebunden werden kann.

Die zum Einbrennen der Lacke bzw. Heißaktivierung der Klebstoffe bzw. Folien notwendige Wärme wird den Metallbändern vor dem Wiederaufwickeln durch Wasser- oder Luftkühlung wieder entzogen, so daß das Band beim Aufrollen eine Temperatur von ca. 40 °C hat.
Das beschichtete Metall ist fertig oberflächenveredelt und kann durch mechanisches Umformen zu Fertigbauteilen weiterverarbeitet werden. Damit entfällt für den Bauteilhersteller jeglicher Umgang mit Lacken, Klebstoffen, Folien beziehungsweise den dazu gehörigen Prozessen. Einsatzfelder für die bandbeschichteten Materialien sind zum Beispiel die Bau-, die Auto- und die Haushaltsgeräteindustrie sowie die Elektronikindustrie.

Die mechanische Umformbarkeit stellt an die bandbeschichteten Materialien besondere Anforderungen. Einerseits sollen alle Schutzfunktionen, die Oberflächenveredelungen normalerweise darstellen, erfüllt sein, andererseits müssen die Beschichtungen die Umformungen des Metalls mitmachen, ohne daß die Schichten selbst oder ihre Verbundfestigkeit mit dem Metall in Mitleidenschaft gezogen wird. Zur Prüfung der Verbundfestigkeit kommt insbesondere die Erichsentiefung zum Einsatz.

Die hohe Effizienz und die Konzentration der Veredelungsprozesse auf wenige, optimierte Anlagen ist ein großer Vorteil des Verfahrens, der allerdings dann in einen Nachteil umschlägt, wenn es zu Problemen bei der Beschichtung kommt, die zu Defekten führen oder das beschichtete Material nachträglich beschädigt wird. Dann ist in aller Regel eine große Menge Material betroffen, das sich vor Ort beim Verarbeiter auch nicht mehr nachträglich korrigieren läßt.

Bezüglich der nachträglichen Beschädigung von beschichtetem Material wäre ein Schutz vor mechanischer Einwirkung und/oder Einwirkung durch Staub, Funkenflug, aggressive Chemikalien etc. vorteilhaft, der auch bei der mechanischen Umformung noch auf dem beschichteten Metall verbleiben könnte und idealer weise erst vom fertigen Bauteil abgezogen zu werden braucht. Damit wäre während der gesamten Transport- und Bearbeitungskette des bandbeschichteten Materials bis zum Endprodukt ein optimaler Schutz der veredelten Oberfläche gewährleistet und damit die Gefahr des Erzeugens von Ausschuß innerhalb dieser Kette minimiert.

Folien sind als Oberflächenschutzfolien für Lackschichten aus anderen Anwendungsfeldern im Prinzip bekannt. In DE 195 32 220 A1 und DE 196 35 704 A1 sind derartige Folien beschrieben, die insbesondere zum Schutz von lackierten Autokarosserien eingesetzt werden. Hier werden Schutzfolien als Montage- und Transportschutzfolien für frisch lackierte Oberflächen von Automobilen eingesetzt. Es handelt sich dabei um Folien auf Basis von Polypropylen, Polyethylen, Mischungen der beiden Polymere oder Copolymere von Propylen und Ethylen sowie gegebenenfalls weiterer Monomere, die zum Schutz vor UV-Licht Titandioxid als Füllstoff sowie Lichtschutzmittel enthalten können. Diese Folien sind mit haftklebrigen Klebmassen ausgestattet, z. B. auf Basis von Ethylenvinylacetat-Copolymeren oder Polyisobutylen. Je nach Wechselwirkung mit dem jeweiligen Untergrund, d. h. erforderlicher Abzugskraft nach Lagerung kommen aber auch Massen auf Acrylatbasis, Silikonbasis oder Basis anderer Polymerer in Frage. Die ideale Materialkombination Klebmasse/organisches Bandbeschichtungsmaterial ist im Einzelfall zu ermitteln.

In der DE 196 35 704 A1 ist ebenfalls die Verwendung von selbstklebend ausgerüsteter Folie als Montage- und Transportschutzfolie für frisch lackierte Bandstahlbleche offenbart.

In derselben Offenlegungsschrift ist außerdem die Verwendung der Folie als Kantensicherungsband zur zusätzlichen Befestigung großflächiger selbstklebender Abdeckfolie dargestellt.

Erwünscht ist ebenfalls der Schutz von selbstklebenden Dekorfolien, welche sich auf unterschiedlichen Untergründen befinden können. Herkömmliche Schutzfolien lassen sich von Dekorfolien in der Regel nicht wieder entfemen, ohne daß die Dekorfolie beschädigt wird oder die Farbe oder Oberflächenstruktur der Dekorfolie sich verändert.

Aufgabe der Erfindung ist es, eine geeignete Folie für die Verwendung als Schutzfolie für Dekorfolien, insbesondere für solche, welche über das Bandbeschichtungsverfahren aufgebracht wurden, zur Verfügung zu stellen. Bei der Ablösung der Schutzfolie nach erfolgtem Montage- und/oder Transportvorgang soll die Schutzfolie rückstandslos wiederabzulösen sein, ohne daß die Oberfläche der Dekorfolie beschädigt wird. Bei langem Verbleib der Schutzfolie auf der Dekorfolie soll weder die Bedruckung der Dekorfolie stumpf werden noch eine Farbveränderung eintreten, sondern der optische Eindruck soll dem der zwischenzeitlich nicht beklebten Dekorfolie gleichen.

Die Aufgabe lösen überraschend und für den Fachmann nicht vorhersehbar die in den Schriften DE 195 32 220 A1 und DE 196 35 704 A1 dargestellten selbstklebend ausgerüsteten Folien sowie Weiterentwicklungen dieser Folien auf Basis von Polypropylen, Polyethylen, Mischungen der beiden Polymere oder Copolymere von Propylen und Ethylen sowie gegebenenfalls weiterer Monomere.

Demgemäß betrifft der Hauptanspruch die Verwendung von mit Selbstklebemassen ausgerüsteten Folien auf Basis von Polyolefinen zum temporären Schutz von Dekorfolien. Diese selbstklebenden Folien sind vorteilhaft derart gestaltet, daß sie sich aus einer Trägerschicht, einer Kleberschicht und gegebenenfalls einer Primerschicht zusammensetzen.

Erfindungsgemäß vorteilhaft wird die Folie verwendet für zu schützende Dekorfolien, die in einem Bandbeschichtungsprozeß auf Metallbänder aufgebracht sind.

Erfindungsgemäß sehr günstig ist es, wenn die selbstklebende Folie aus Polypropylen oder Polyethylen, einem Gemisch der beiden Komponenten oder einem Copolymer aus α-Olefinen mit 2- 12 Kohlenstoffatomen oder einem Gemisch von mindestens zwei der genannten Komponenten besteht.

Es ist von großem Vorteil, eine Folie erfindungsgemäß zu verwenden, bei der die Trägerschicht der selbstklebenden Folie mindestens ein Polypropylen-Blockcopolymer enthält.

Hervorragend erfindungsgemäß geeignet sind Folien, bei denen der Gehalt an Polypropylen-Blockcopolymer 10 bis 95 % (w/w) der Schutzfolie ausmacht.

Sehr günstig für die erfindungsgemäße Verwendung ist es, wenn die Trägerschicht eine ungereckte Folie ist.

Ebenfalls von Vorteil für die erfindungsgemäße Verwendung ist es, wenn sich zwischen der Trägerschicht und der Selbstklebemasse eine Primerschicht zur Verbesserung der Haftung der Selbstklebemasse auf dem Träger befindet.

Ebenso ist es im erfindungsgemäßen Sinne hervorragend, wenn die Selbstklebemasse auf Basis von Polyethylenvinylacetat aufgebaut ist.

Ein besonderer, überraschender Vorteil ist, daß mit dem durch die Folien bedeckten Material Umformungsprozesse möglich sind, ohne daß die Folie oder die darunter liegende Dekorfolie dabei beschädigt wird und ohne daß sich die erfindungsgemäße Folie dabei von der Dekorfolie löst. Damit ist es möglich, diesen Oberflächenschutz auf dem beschichteten Material zu belassen, bis dieses als Bauteil beispielsweise in ein Gerät eingebaut worden ist. Die selbstklebend ausgerüstete Folie kann also erfindungsgemäß als Montage- und Transportschutz für das Gerät dienen.

Im Falle bandbeschichteter Metallbänder werden die Schutzfolien für die erfindungsgemäße Verwendung vorzugsweise beim Prozeß der Bandbeschichtung aufgebracht, und zwar unmittelbar vor dem Aufrollen des fertig beschichteten (also mit der Dekorfolie versehenen) Bandes. Dies kann durch einfaches Zukaschieren über Kaschierwalzen geschehen. Aber auch das Aufbringen zu einem späteren Zeitpunkt, u. U. als Stanzling auf bereits vereinzelte Stücke, soll keineswegs ausgeschlossen werden.

Im folgenden soll die Erfindung anhand eines Beispiels veranschaulicht werden, ohne die Verwendung dadurch einschränken zu wollen:

Auf ein Prüfblech, das mit einer hochglänzenden, handelsüblichen Polyesterverbundfolie beschichtet war, wurden die Polyolefin-Folien 1 bzw. 2 (Erläuterung in der Tabelle 1) aufkaschiert. Die Kaschierung erfolgte über eine Flächenpresse. Kaschierbedingungen: 2 N/cm², 60 s, 40 °C.

Das aufkaschierte Material war absolut falten- und blasenfrei, die Polyolefin-Folien zeigten eine gute Anfangshaftung, das Material löste sich an keiner Stelle wieder ab.

Die aufkaschierte Folie ließ sich auch nach 3 Monaten Lagerung des Verbundes bei RT leicht wieder abziehen, ohne daß sie riß oder Masserückstände zurückblieben. Die Oberfläche der Polyesterverbundfolie wies keinerlei Veränderungen hinsichtlich Farbe oder Oberflächenstruktur auf.

Das Prüfblech mit der aufkaschierten Polyolefin-Folie wurde einer Erichsentiefung unterzogen:
Durchführung nach DIN 53156.
Durchmesser der Kugel 8 mm, Vorschubgeschwindigkeit: 0,2 mm/s. Es wurde mit dem Gerätetyp 225 der Fa. Erichsen gearbeitet.
Die Folien lösten sich nicht vom Untergrund bis zu einer Eindringtiefe der Kugel von 11 mm.
Dies ist ein Wert, den "Coil Coating"-Beschichtungsmaterialien mit Spitzenqualität gerade noch erreichen können.

Die Ergebnisse sind in der Tabelle 2 zusammengestellt.

**Tabelle 1**

| | Folientyp | Klebmasse | Masseauftrag [g/m²] |
|---|---|---|---|
| Folie 1 | PP/PE | Ethylenvinylacetatcopolymer | 12 |
| Folie 2 | PP/PE | Ethylenvinylacetatcopolymer | 25 |

| | Dicke [µm] | Höchstzugkraft [N/cm] | Reißdehnung [%] | Klebkraft/Stahl [N/cm] |
|---|---|---|---|---|
| Folie 1 | 81 | 27 | 750 | 0.8 |
| Folie 2 | 82 | 28 | 900 | 0.9 |

**Tabelle 2**

| Beschichtung auf Prüfblech bzw. Geprüfte Folie | Falten/Blasen | Soforthaftung | Haftung nach 3 Monaten RT | Oberflächenveränderunzgen nach 3 Monaten RT | Erichsentiefung: Max. Eindringtiefe ohne Ablösungen [mm] |
|---|---|---|---|---|---|
| Folie 1 | Keine | Keine Ablösungen | Keine Ablösungen | Keine | 11 |
| Folie 2 | Keine | Keine Ablösungen | Keine Ablösungen | Keine | 11 |

## Patentansprüche

1. Verwendung von mit Selbstklebemassen ausgerüsteten Folien auf Basis von Polyolefinen zum temporären Schutz von Dekorfolien.

2. Verwendung nach Anspruch 1, **dadurch gekennzeichnet, daß** die zu schützenden Dekorfolien in einem Bandbeschichtungsprozeß auf Metallbänder aufgebracht worden sind.

3. Verwendung nach einem der vorangehenden Ansprüche, **dadurch gekennzeichnet, daß** die Trägerschicht der selbstklebenden Folie aus Polypropylen oder Polyethylen oder einem Copolymer aus α-Olefinen mit 2 - 12 Kohlenstoffatomen oder einem Gemisch von mindestens zwei der genannten Komponenten besteht.

4. Verwendung nach einem der vorangehenden Ansprüche, **dadurch gekennzeichnet, daß** die Trägerschicht der selbstklebenden Folie mindestens ein Polypropylen-Blockcoplymer enthält.

5. Verwendung nach einem der vorangehenden Ansprüche, **dadurch gekennzeichnet, daß** der Gehalt an Polypropylen-Blockcopolymer 10 bis 95 % (w/w) der Schutzfolie ausmacht.

6. Verwendung nach einem der vorangehenden Ansprüche, **dadurch gekennzeichnet, daß** die Trägerschicht eine ungereckte Folie ist.

7. Verwendung nach einem der vorangehenden Ansprüche, **dadurch gekennzeichnet, daß** sich zwischen der Trägerschicht und der Selbstklebemasse eine Primerschicht zur Verbesserung der Haftung der Selbstklebemasse auf dem Träger befindet.

8. Verwendung nach einem der vorangehenden Ansprüche, **dadurch gekennzeichnet, daß** die Selbstklebemasse der Folie aus Polyethylenvinylacetat besteht.
